# EUROPÄISCHE PATENTSCHRIFT

(11) **EP 1 943 290 B1**
(45) Veröffentlichungstag und Bekanntmachung des Hinweises auf die Patenterteilung: **09.09.2009**
(21) Anmeldenummer: 06807324.6
(22) Anmeldetag: 17.10.2006
(51) Int. Cl.: C08G 69/26, C08G 69/28

(54) **POLYAMIDE AUS META-XYLYLENDIAMIN UND ADIPINSÄURE MIT EINEM AMINOENDGRUPPENGEHALT KLEINER ALS 15 MMOL/KG**
POLYAMIDES FORMED FROM META-XYLYLENEDIAMINE AND ADIPIC ACID AND HAVING AN AMINO END GROUP CONTENT OF LESS THAN 15 MMOL/KG
POLYAMIDES ISSUS DE META-XYLYLENEDIAMINE ET D'ACIDE ADIPIQUE PRESENTANT UNE TENEUR EN GROUPES A EXTREMITE AMINO INFERIEURE A 15 MMOL/KG

(30) Priorität: 25.10.2005 DE 102005051400
(43) Veröffentlichungstag der Anmeldung: 16.07.2008
(73) Patentinhaber: BASF SE, 67056 Ludwigshafen (DE)
(72) Erfinder: STRAUCH, Joachim, 68163 Mannheim (DE); ROSENAU, Bernhard, 67434 Neustadt (DE); DEININGER, Jürgen, 68723 Oftersheim (DE); GRÜTZNER, Rolf-Egbert, 67283 Obrigheim (DE); LIESE-SAUER, Thomas, 67454 Hassloch (DE)
(86) Internationale Anmeldenummer: PCT/EP2006/067471
(87) Internationale Veröffentlichungsnummer: WO 2007/048728

(56) Entgegenhaltungen:
- EP-A- 1 308 478
- WO-A2-20/06061160
- JP-A- 2003 165 838
- US-A- 4 837 115

## Beschreibung

Die vorliegende Erfindung betrifft Polyamide aus meta-Xylylendiamin und Adipinsäure mit einem Aminoendgruppengehalt kleiner als 15 mmol/kg sowie Verfahren zu deren Herstellung.

Aus der US-A-2,998,463 ist ein Verfahren zur Herstellung von linearen Copolymeren von monosubstituierten Acetylenen mit terminalen unkonjugierten Diacetylenen bekannt.

Aus US-A-4,837,115 ist ein Polymer aus meta-Xylylendiamin und Adipinsäure mit einem Aminoendgruppengehalt kleiner als 15 mmol/kg und einer relativen Viskosität von 2,24 bekannt.

Aus der WO-A-00/22043 ist die Herstellung eines niedermolekularen Poly(m-xylylen-adipamids) mit Säureendgruppenüberschuss als Blendkomponente für Polyethylenterephthalate beschrieben. Die Herstellung des Poly(m-xylylenadipamids) erfolgt in einem drucklosen, diskontinuierlichen Prozess, der zur industriellen Produktion nicht geeignet ist. Weiterhin besitzt das Poly(m-xylylenadipamid) einen sehr hohen Restmonomergehalt an Adipinsäure.

Aus der US-B-6,303,741 ist die Festphasenkondensation von Poly(m-xylylen-adipamiden) in einem Schmelzeprozess bekannt. Die Säureendgruppenüberschüsse nach der Schmelzepolymerisation sind folgendermaßen definiert: 8 ≤ CEG-AEG ≤ 82; für die relative Viskosität gilt: 1,83 ≤ RV ≤ 2,28 (nach der Schmelzepolymerisation).

JP-A-2003/165838 und JP-A-2003/252986 betreffen einen zweistufigen Prozess zur Herstellung von Polymeren, basierend auf einem Ansatzgemisch aus den Monomeren und weniger als 20 Gew.-% Wasser. Es werden Poly(m-xylylenadipamide) mit folgendem Endgruppenverhältnis erhalten: CEG/AEG ≥ 1,2. Das endgültige Endgruppenverhältnis wird am Ende des Prozesses durch Zugabe von Regler, genauer gesagt Säure-anhydriden, gesteuert. Die relative Viskosität beträgt 1,8 ≤ RV ≤ 3,6.

Der vorliegenden Erfindung lag daher die Aufgabe zugrunde, den zuvor genannten Nachteilen abzuhelfen.

Demgemäß wurden neue und verbesserte Polyamide aus meta-Xylylendiamin und Adipinsäure gefunden, welche dadurch gekennzeichnet sind, dass der Aminoendgruppengehalt kleiner als 15 mmol/kg ist, die relative Viskosität 1,55 bis 2,0 beträgt und der Gehalt an Triamin im Polyamid kleiner gleich 0,3 mol-% ist, wobei die relative Viskosität des Polyamids mit Proben von 1 g Polyamid in 100 ml 96 gew.-%iger Schwefelsäure und die Messung mit Hilfe eines Ubbelohde-Viskosimeters 2 Typ 50120 (Firma Schott) nach DIN EN ISO 1628-1 durchgeführt wird.

Die erfindungsgemäßen Polyamidzusammensetzungen zeichnen sich aus durch
a) einen niedrigen Gehalt an Triamin (< 0,30 Gew.-%, bevorzugt < 0,15 Gew.-%),
b) durch einen auf minimale Triamingehalte optimierten Herstellungsprozess (kontinuierlich und diskontinuierlich), der auf einer 50 bis 70 Gew.-% wässrigen Salzlösung basiert und industriell umsetzbar ist,
c) einem minimaler Aminoendgruppengehalt (AEG < 15) und einer relativen Viskosität im Bereich von 1,55 bis 2,0,
d) einer hohen Schmelzestabilität (η₆₀ₘᵢₙ/η₅ₘᵢₙ< 1,5 , η₆₀ₘᵢₙ=Schmelzviskosität nach 60 min bei 280 °C im Rheometer, η₅ₘᵢₙ=Schmelzviskosität nach 60 min bei 280°C im Rheometer) und einer hohen Stabilität während Festphasenkondensationen (ΔRV < 0,4 nach 14 h bei 230°C),
e) eine hohe Dispergierbarkeit in Polyethylenterephthalaten. Die Dispergierbarkeit der Polyamide in der Polyethylenterephthalatmatrix wirkt sich unmittelbar auf die Trübung (Haze) der aus den PET/Polyamid-Mischungen hergestellten Behälter oder Folien aus. Je feiner das Polyamid dispergiert ist, desto geringer ist der Haze. So z. B. zeigen Monolayerflaschen aus Mischungen der erfindungsgemäßen Polyamide und Polyethylenterephthalate, die durch Isophthalsäure und Alkalisalzen der Sulfoisophthalsäure modifiziert sind, überraschend niedrige Haze-Werte.

Das erfindungsgemäße Verfahren kann wie folgt ausgeführt werden:

Man kann Salzlösungen, bevorzugt wässrige, von Adipinsäure und m-Xylylendiamin [1,3-Bis-(aminomethyl)-benzol] diskontinuierlich oder bevorzugt kontinuierlich bei Temperaturen von 80 bis 300°C, bevorzugt 100 bis 280°C, besonders bevorzugt 120 bis 270°C und einem Druck von 1 bis 20 bar, bevorzugt 1,5 bis 10 bar, besonders bevorzugt 2 bis 7 bar, insbesondere 3 bis 6 bar in Druckbehältern unter Entfernung von Wasser umsetzen.

Bei der diskontinuierlichen Fahrweise erfolgt die Umsetzung in der Regel in einer oder mehreren, also 1 bis 6, bevorzugt 2 bis 4, besonders bevorzugt 2 oder 3, insbesondere 2 Druckstufen.

Bei der Ausführungsform in einer Druckstufe kann die Mischung von Adipinsäure und m-Xylylendiamin bei einer Temperatur von 80 bis 300°C, bevorzugt 150 bis 280°C durch Entfernen von Wasser bis auf 80 bis 100 Gew.-%, bevorzugt 90 bis 100 Gew.-%, besonders bevorzugt 95 bis 100 Gew.-% aufkonzentriert werden.

Die Ausführungsform mit 2 Druckstufen kann so erfolgen, dass in der ersten Druckstufe, die in der Regel bei einem Druck von 1 bis 3 bar durchgeführt und die Mischung von Adipinsäure und m-Xylylendiamin bei einer Temperatur von 80 bis 150°C, bevorzugt 100 bis 140°C durch Entfernen von Wasser bis auf 80 bis 98 Gew.-%, bevorzugt 85 bis 96 Gew.-%, besonders bevorzugt 90 bis 95 Gew.-% aufkonzentriert wird. In der zweiten Druckstufe, die in der Regel bei einem Druck von 1 bis 3 bar durchgeführt wird, kann bei einer Temperatur von 120 bis 300°C, bevorzugt 150 bis 280°C und einem Druck von 3,5 bis 10 bar, bevorzugt 4 bis 6 bar durch Entfernen von Wasser bis auf 95 bis 100 Gew.-%, bevorzugt 98 bis 100 Gew.-%, besonders bevorzugt 99 bis 100 Gew.-% aufkonzentriert werden.

Eine besonders bevorzugte Ausführungsform der diskontinuierlichen Umsetzung besteht darin, dass man in einem gerührten Stahlautoklaven bei einem Druck von 2 bis 10 bar, bevorzugt von 3 bis 8 bar und besonders bevorzugt von 4 bis 6 bar arbeitet. Dabei wird ein zweistufiges Druckprofil verwendet. Die Mischung wird zunächst auf 120°C Innentemperatur aufgeheizt und ab einem Druck von 2 bar wird soviel Wasser abdestilliert, dass ein ca. 90 Gew.-%iges Gemisch vorliegt. Dabei steigt die Innentemperatur auf 155 bis 165°C an. Anschließend wird das Gemisch auf den Zieldruck aufgeheizt, wobei 4 bar besonders bevorzugt ist. Die Temperatur steigt bei 4 bar auf 170 bis 180°C an. Bei 4 bar wird das restliche Wasser abdestilliert, wobei die Temperatur auf 245 bis 250°C steigt. Der Kessel wird danach auf Atmosphärendruck entspannt. Falls die relative Viskosität, die zur anschließenden Granulierung notwendig ist, noch nicht erreicht ist, schließt sich eine Nachkondensationszeit in der Schmelze unter Stickstoffspülung bei 245 bis 265°C mit einer variablen Dauer von 5 bis 30 min an. Im Anschluss an die Nachkondensation wird das Polyamid durch ein Wasserbad ausgefahren und der Strang granuliert. Eine Innentemperatur von 265°C wird während des gesamten Kondensationsprozesses nicht überschritten. Durch das verwendete, schonende Temperatur/Druckprofil liegt der Verlust an meta-Xylylendiamin während des Polymerisationsprozesses unter 0,15 Gew.-% . Eine wie in der JP-A-2003/165838 und JP-A-2003/252986 bereits beschriebene Korrektur des Endgruppenverhältnisses in der Endphase des Prozesses durch Zugabe von Reglern ist daher nicht notwendig. Die relative Viskosität der erfindungsgemäßen Polyamidzusammensetzungen, gemessen als 1 %ige Lösung (1g/100 ml) in 96 Gew.-% H₂SO₄ bei 23°C, liegt im Bereich von 1,45 bis 1,70.

Bei der bevorzugten kontinuierlichen Fahrweise kann die Umsetzung so durchgeführt werden, dass man Salzlösungen von Adipinsäure und m-Xylylendiamin bei einer Temperatur von 210 bis 330°C, bevorzugt 250 bis 300°C, besonders bevorzugt 260 bis 280°C erhitzt, danach vorzugsweise das Präpolymere von Edukt und Wasser (hier Dampf genannt) diskontinuierlich, bevorzugt kontinuierlich trennt, das abgetrennte meta-Xylylendiamin ggf. bzw. vorzugsweise in der Regel quantitativ zurückleitet. Schließlich kann das Präpolymer unter einem Druck von 1 bis 20 bar, bevorzugt 1,5 bis 15 bar, besonders bevorzugt 2 bis 10 bar, insbesondere 4 bis 6 bar und einer Temperatur von 230 bis 330°C, bevorzugt 250 bis 300°C, besonders bevorzugt 260 bis 280°C polykondensiert werden.

Eine besondere Ausführungsform besteht darin, dass die Salzlösung unter einem Druck von 2 bis 10 bar, vorzugsweise 4 bis 6 bar innerhalb einer Verweilzeit von 60 Sekunden erhitzt wird, wobei bei Austritt aus der Verdampferzone der Umsetzungsgrad mindestens 95% und der Wassergehalt des Präpolymeren höchstens 7 Gew.-% beträgt. Dies wir dadurch erreicht, dass man die Salzlösung durch eine abschnittsweise rohrförmig uns spaltförmig ausgeführte oder rohrförmige mit Füllkörpern gefüllte Verdampfungszone leitet, in der sich durch Aufheizung und Wasserverdampfung bereits eine Zweiphasenströmung ausbildet und dabei bereits der größte Teil des Lösewassers in die Gasphase getrieben wird. Durch diese kurzen Verweilzeiten wir in der Regel die Bildung von Triaminen weitgehend unterdrückt. Die verwendeten wässrigen Lösungen haben in der Regel einen Monomergehalt von 30 bis 70 Gew.-%, insbesondere von 45 bis 65 Gew.-%.

In der besonders bevorzugten Ausführungsform kann die wässrige Salzlösung vorteilhaft mit einer Temperatur von 50 bis 100°C diskontinuierlich, bevorzugt kontinuierlich in eine Verdampferzone geleitet werden, wo die wässrige Salzlösung unter einem Druck von 2 bis 10, vorzugsweise 4 bis 6 bar auf eine Temperatur von 250 bis 300°C, vorzugsweise 260 bis 280°C erhitzt werden kann.. Die Verdampfungszone besteht aus einem oder mehreren - mit ringförmigen Füllkörpern gefüllten Rohr(en) -mit einem I/d - Verhältnis von 100:1 bis 200:1, vorzugsweise 120:1 bis 180, besonders bevorzugt 140:1 bis 160:1, die mit Durchsätzen von 1 bis 10 kg Polymer pro Stunde und Rohr, vorzugsweise 3 bis 7 kg Polymer pro Stunde und Rohr, besonders bevorzugt von 4 bis 6 kg Polymer pro Stunde und Rohr durchfahren wird. Vorteilhafterweise werden die Rohre mit einer kurzen Verweilzeit durchfahren. Der Umsatz beim Austritt aus der Verdampferzone beträgt in der Regel 80 bis 100%, bevorzugt 90 bis 99,5%, besonders bevorzugt 95 bis 99%, insbesondere 96 bis 98% und der Wassergehalt liegt in der Regel im Bereich von 0,01 bis 10 Gew.-%, bevorzugt 0,1 bis 5 Gew.-%, besonders bevorzugt 1 bis 3 Gew.-% , abhängig vom eingestellten Druck. Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist. Ferner hat sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, dass die Menge des mit Wasserdampf freigesetzten meta-Xylylendiamins erheblich vermindert wird.

Das aus der Verdampferzone bzw. Stoffaustauschzone austretende zweiphasige Gemisch aus Dampf und Präpolymer wird getrennt. Die Trennung erfolgt in der Regel von selbst aufgrund der physikalischen Eigenschaften in einem Gefäß, wobei der untere Teil des Gefäßes vorteilhaft als Polymerisationszone ausgebildet ist. Die frei werdenden Brüden bestehen im wesentlichen aus Wasserdampf und Spuren von meta-Xylylendiamin, das beim Verdampfen des Wassers freigesetzt wurde. Dabei befindet sich in der Regel nur eine äußerst geringe Menge an meta-Xylylendiamin in der Gasphase (< 0,1 Gew.-% bezogen auf den Polymerdurchsatz). Diese Brüden können in eine Kolonne geleitet und rektifiziert werden, um das meta-Xylylendiamin zurückzugewinnen. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Vorteilhafterweise kann das rektifizierte meta-Xylylendiamin der nachfolgenden Polymerisationszone zugeführt werden.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität (gemessen als Lösung mit einer Konzentration von 1g pro 100g Lösungsmittel in 96%iger Schwefelsäure) von kleiner gleich 1,2 hat, wird in eine Polymerisationszone geleitet. In der Polymerisationszone kann die anfallende Schmelze in der Regel bei einer Temperatur von 245 bis 285°C, insbesondere 255 bis 275°C und unter einem Druck von 2 bis10 bar, insbesondere 4 bis 6 bar, polykondensiert.

Vorteilhaft kann man nach einer bevorzugten Arbeitsweise das so erhaltene Polyamid schmelzflüssig durch eine Austragszone unter gleichzeitiger Entfernung des in der Schmelze enthaltenen Restwassers leiten. Geeignete Austragszonen sind z. B. Entgasungsextruder. Die so vom Wasser befreite Schmelze kann dann nach an sich bekannten Verfahren aufgearbeitet werden, beispielsweise durch Unterwasserkugelgranulierung, Unterwasserstranggranulierung oder Stranggranulierung. Das erhaltene Granulat kann einer Extraktion unterzogen werden und diese kann sowohl kontinuierlich als auch diskontinuierlich erfolgen. Als Extraktionsmittel eignen sich unter anderem Wasser, C₁- bis C₈-Alkanole wie Ethanol und Methanol, bevorzugt Wasser. Das extrahierte Polyamid kann in einem weiteren Schritt einer Festphasenkondensation unterzogen werden. Diese kann sowohl im Vakuum als auch unter Inertgas wie Stickstoff oder Argon, bevorzugt Stickstoff durchgeführt werden. Die Temperatur kann dabei in weitem Bereich variiert werden, sie liegt in der Regel zwischen 120 bis 230°C, bevorzugt zwischen 130 bis 210°C und besonders bevorzugt zwischen 140 bis 190°C. Nach einer bevorzugten Arbeitsweise kann das Polyamid mit einer Unterwasserkugelgranulierung granuliert werden.

Die relative Viskosität der erfindungsgemäßen Polyamide, gemessen in 1 % Lösung (1g/100 ml) in 96 gew.-%iger Schwefelsäure bei 25°C, liegt nach Verlassen des Austragsextruders im Bereich von 1,45 bis 1,55.

Zur Einstellung der relativen Zielviskositäten kann das erhaltene Granulat schließlich in fester Phase diskontinuierlich bevorzugt in Taumlern oder kontinuierlich bevorzugt in Tempertürmen auf eine relative Viskosität im Bereich von 1,55 bis 2,0 bei Temperaturen zwischen 140 und 160°C eingestellt werden. Die erfindungsgemäßen Polyamidzusammensetzungen haben nach dem Herstellungsprozess relative Viskositäten im Bereich von 1,55 und 2,0, bevorzugt von 1,60 bis 1,9 und besonders bevorzugt von 1,65 bis 1,75. Nach Temperung liegt der Wert für die Restfeuchte im Granulat in der Regel unter 250 ppm.

Das Molverhältnis von Adipinsäure zu meta-Xylylendiamin kann variiert werden, liegt in der Regel bei 1,5:1 bis 1,001:1, bevorzugt bei 1,2:1 bis 1,005:1, besonders bevorzugt bei 1,1:1 bis 1,007:1, insbesondere bei 1,05:1 bis 1,01:1.

Der Restmonomergehalt an Adipinsäure in den erfindungsgemäßen, unextrahierten Polyamiden beträgt bis zu 600 ppm.Im Hinblick auf die mögliche Verwendung in Verpackungen von Lebensmitteln kann das Granulat der Polyamide einer Extraktion unterzogen werden. Dadurch wird der Gehalt an Restmonomeren effektiv gesenkt.

Der Restmonomerengehalt an Adipinsäure im Polyamid beträgt nach der Extraktion in der Regel bis zu 500 ppm, beispielsweise 1 bis 400 ppm, bevorzugt 1 bis 200 ppm, besonders bevorzugt zwischen 1 bis 150 ppm. Der Restmonomergehalt an meta-Xylylendiamin liegt in der Regel unter 10 ppm.

Als Polyamide eignen sich in der Regel alle Polyamidedie aus 50 bis 100 Gew.-%, bevorzugt 70 bis 100 Gew.-%, besonders bevorzugt 85 bis 100 Gew.-% Einheiten aus meta-Xylylendiamin und Adipinsäure sowie 0 bis 50 Gew.-%, bevorzugt 0 bis 30 Gew.-%, besonders bevorzugt 0 bis 15 Gew.-% der entsprechender anderer Polyamideinheiten und/oder gegebenenfalls Kettenregler und/oder gegebenenfalls Stabilisatoren aufgebaut sind.

Als Comonomere des meta-Xylylendiamins eignen sich beispielsweise aliphatische, aromatische oder arylaliphatische Diamine wie Ethylendiamin, Butylendiamin, Pentamethylendiamin, Hexamethylendiamin, Cyclohexandiamin, Octamethylendiamin, Bis(4,4-aminocyclohexyl)methan, Bis(4,4-amino-3,3-methylcyclohexyl)methan, Bis(amino)cyclohexan, para-Phenylendiamin, ortho-Xylylendiamin und para-Xylylendiamin.

Als Comonomere der Adipinsäure eignen sich beispielsweise aliphatische, aromatische oder arylaliphatische Dicarbonsäuren wie Terephthalsäure, Sulfoisophthalsäure und deren Salze, Naphthalin-2,6-dicarbonsäure, Cyclohexandicarbonsäure, Bernsteinsäure, Glutarsäure, Azelainsäure und Sebacinsäure.

Als Kettenregler eignen sich beispielsweise monofunktionelle Regler wie Triacetondiaminverbindungen (siehe WO-A 95/28443), Monocarbonsäuren wie Essigsäure, Propionsäure und Benzoesäure, sowie Basen wie (Mono-)Amine, beispielsweise Hexylamin oder Benzylamin.
Um die Eigenschaften der erfindungsgemäßen Polyamide zu verbessern, eignen sich zur Modifizierung alle bekannten Additive wie beispielsweise Nukleierungsmittel, Farbstoffe, Farbpigmente, Fließverbesserer, UV absorbierende Substanzen, Mattierungsmittel, Sauerstoff-Scavenger, anorganische oder organische oder schlagzäh modifizierte Füllstoffe.

Als Stabilisatoren eignen sich literaturbekannte (Plastics Additives Handbook, 5th Edition, Seiten 97 - 136; 2001) sterisch gehinderte Phenole, Phosphorverbindungen wie z.B. die Phosphite und Hypophosphite und Mischungen dieser beiden Stabilisatorklassen.

Die Polyamide enthalten in der Regel 0 bis 0,5 Gew.-%, bevorzugt 0,001 bis 0,1 Gew.-%, besonders bevorzugt 0,01 bis 0,05 Gew.-% Stabilisatoren.

In einer bevorzugten Form enthalten die erfindungsgemäßen Polyamidzusammensetzungen 0 bis 0,05 Gew.-%, besonders bevorzugt 0 bis 0,03 Gew.-% Hypophosphit.

In einer besonders bevorzugten Ausführungsform liegt der Gehalt an sec. Triamin im Polyamid bei kleiner gleich 0,3 Gew.-%, bevorzugt kleiner gleich 0,15 Gew.-%. Dieser Gehalt lässt sich beispielsweise indirekt über den sog. "Triamingehalt" [(Xylylentriamin)-Gehalt -> siehe nachfolgende Strukturformel] bestimmen (siehe Beispiele).

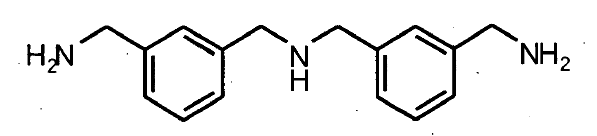

Die geringen Aminoendgruppenwerte können über die Stöchiometrie der beiden Monomere beim Herstellen der Ansatzsalzlösung gesteuert werden. Dabei können bei den erfindungsgemäßen Polyamidzusammensetzungen Adipinsäureüberschüsse im Bereich von 60 mmol/kg bis 150 mmol/kg, bevorzugt 70 mmol/kg bis 130 mmol/kg, besonders bevorzugt 80 mmol/kg bis 110 mmol/kg.

Die erfindungsgemäßen Polyamide aus meta-Xylylendiamin und Adipinsäure eignen sich zur Herstellung oder als Ausgangsmaterial, insbesondere in Verbindung mit Polyestern, für die Herstellung von Formkörpern, Rohre, Profile, Vorformen, Behälter, Schalen, Fasern, Film, Flaschen und Schäumen aller Art, z.B. durch Extrudieren, Spritzgießen, Kalandrieren, Hohlkörperblasen, Pressen, Sintern oder andere übliche Verfahren der Thermoplastverarbeitung.

Geeignete Polyester sind beispielsweise Polybutylenterephthalate, Polyethylennaphthalate, Polytrimethylenterephthalat und Polyethylenterephthalat sowie die entsprechenden Copolyester.

Eine weitere Eigenschaft der erfindungsgemäßen Polyamidzusammensetzungen ist die überraschend gute Dispergierbarkeit in einer Polyethylenterephthalat-Matrix. Besonders gute Resultate können bei Polyethylenterephthalaten, die durch Isophthalsäure und durch Alkalisalze der Sulfoisophthalsäure modifiziert sind, erreicht werden.

Die bevorzugte Anwendung der erfindungsgemäßen Polyamide liegt in der Herstellung von Blendmischungen mit Polyethylenterephthalat, die durch Isophthalsäure und durch Alkalisalze der Sulfoisophthalsäure modifiziert sind. Diese eignen sich besonders zur Herstellung von transparenten, farblosen Behältern und Spritzkörpern, insbesondere von Preforms und Flaschen für die Getränkeindustrie. In dieser bevorzugten Anwendung sind 0,01 und 15 Gew.-%, bevorzugt 0,02 bis 10 Gew.-%, besonders bevorzugt 0,03 bis7 Gew.-% Polyamid im Polyethylenterephthalat enthalten.

Ein allgemeines Verfahren besteht darin, dass Granulatmischungen aus den modifizierten Polyethylenterephthalaten und den erfindungsgemäßen Polyamiden hergestellt werden. Diese "Pfeffer/Salz"-Mischungen können direkt auf der Spritzgußmaschine zu Formkörpern und Preforms umgesetzt werden.

Die Verwendung der erfindungsgemäßen Polyamide in Verbindung mit den Polyethylenterephthalaten ist nicht nur auf das Herstellen von Granulatmischungen beschränkt. Ein weiterer Vorteil der erfindungsgemäßen Polyamide liegt in der hohen Stabilität in Bezug auf das Molekulargewicht und die Farbe. Dadurch überstehen diese Polyamidzusammensetzungen Weiterverarbeitungsprozesse in Gegenwart von Polyethylenterephthalaten, ohne Gele zu bilden und zeichnen sich dabei durch eine hohe Stabilität in der Schmelze und in Festphasenkondensationsprozessen aus. Dabei sind die Polyethylenterephthalate durch Isophthalsäure und durch Alkalisalze der Sulfoisophthalsäure modifiziert.

Bei den Weiterverarbeitungsprozessen in der Schmelze handelt es sich besonders um Extrusionsprozesse zur Herstellung von Polyamid/Polyethylenterephthalat-Blendgranulaten mit dispergiertem Polyamid in einer Polyethylenterephthalat-Matrix.

Eine bevorzugte Verwendung der erfindungsgemäßen Polyamide in Verbindung mit Polyethylenterephthalaten ist die Herstellung von zwei oder mehrkomponenten Granulaten. Dieses bicomponente Granulat kann z.B. eine Kern/Schale-Struktur besitzen, wobei das Polyamid den Kern bildet und das Polyethylenterephthalat als Schale das Polyamid umgibt. Die Polyethylenterephthalate sind dabei vorteilhafterweise durch Isophthalsäure und durch Alkalisalze der Sulfoisophthalsäure modifiziert. Die Bico-Pellets können in der weiteren Verarbeitung einer Festphasenkondensation (200-240°C, 10-14h) unterzogen werden. Unter dieser thermischen Belastung bilden die in der Literatur beschriebenen Polyamidzusammensetzungen Gele durch Bildung von Xylylentriamin oder zeigen einen starken Viskositätsaufbau. Durch die Gele und den Viskositätsaufbau der Polyamidzusammensetzungen während der Verarbeitung eignen sich die Bico-Pellets aus den bisher bekannten und verfügbaren Polyamidzusammensetzungen weniger zur Weiterverarbeitung zu durchsichtigen Folien und Behältern, besonders Flaschen
Die in dieser Erfindung beschriebenen Polyamidzusammensetzungen lösen dieses Problem. Augrund der hohen Stabilität der Polyamidzusammensetzungen während des Verarbeitungsprozesses werden Bico-Pellets erhalten, aus denen hochtransparente, gelfreie Flaschen hergestellt werden.

### Beispiele

### Endgruppen (AEG = Aminoendgruppengehalt, CEG = Säureendgruppengehalt)

Die vorgenannten Konzentrationen sind wie üblich definiert als Anzahl Endgruppen (in Mol bzw. Äquivalent) pro Masseneinheit Polyamid, beispielsweise x mmol Endgruppen pro kg Polyamid.

Die Bestimmung der Aminoendgruppen kann man beispielsweise mittels Titration einer Lösung des Polyamids in Gegenwart eines Indikators durchführen. Dazu wird das Polyamid in einem Gemisch aus Phenol und Methanol (z.B. 75 Gew.-% Phenol und 25 Gew.-% Methanol) unter Erwärmen gelöst. Beispielsweise kann man die Mischung unter Rückfluss am Siedepunkt halten, bis das Polymer gelöst ist. Die abgekühlte Lösung wird mit einem geeigneten Indikator bzw. einer Indikatormischung (z.B. methanolische Lösung aus Benzylorange und Methylenblau) versetzt und mit einer methanolhaltigen Perchlorsäurelösung in Glykol, bis zum Farbumschlag titriert. Aus dem Perchlorsäureverbrauch wird die Aminoendgruppenkonzentration berechnet.

Alternativ kann man die Titration ohne Indikator auch potentiometrisch mit einer Perchlorsäurelösung in Ethylenglykol durchführen, wie in der WO 02/26865 auf Seite 11 beschrieben.

Die Bestimmung der Carboxylendgruppen kann man z.B. ebenfalls durch Titration einer Lösung des Polyamids unter Verwendung eines Indikators vornehmen. Dazu wird das Polyamid in Benzylalkohol (Phenylmethanol) unter Erwärmen z.B. bis zum Sieden, gelöst, wobei man ein Steigrohr aufsetzt und Stickstoffgas einleitet. Die noch heiße Lösung wird mit einem geeigneten Indikator (z.B. propanolische Lösung von Kresolrot) versetzt und sofort mit einer alkoholischen Kaliumhydroxidlösung (KOH gelöst in einer Mischung aus Methanol, 1-Propanol und 1-Hexanol) bis zum Farbumschlag titriert. Aus dem KOH-Verbrauch wird die Carboxylendgruppenkonzentration berechnet.

Alternativ kann man die Titration ohne Indikator auch konduktometrisch mit einer NaOH-Lösung in Benzylalkohol durchführen, wie in der WO 02/26865 auf Seite 11-12 beschrieben.

### Relative Viskosität RV

Die relative Viskosität des Polyamids wurde mit Proben von 1 g Polyamid in 100 ml 96 Gew.-%iger Schwefelsäure und die Messung mit Hilfe eines Ubbelohde-Viskosimeters 2 Typ 50120 (Firma Schott) nach DIN EN ISO 1628-1 durchgeführt.

### Intrinsische Viskosität IV

Die intrinsische Viskosität der schwach kristallinen Polyethylenterephthalate mit einem mittleren Molekulargewicht wurde bestimmt, in dem 0,1 g Polymer (gemahlenes Granulat) in 25 ml einer 60/40-Mischung aus Phenol und Tetrachlorethan gelöst wurde. Die Viskosität dieser Lösung wurde bei 30 °C mit einem Ubbelohde 1B Viskosimeter bestimmt. Die intrinsische Viskosität wurde über die relative Viskosität mit Hilfe der Billmeyer-Gleichung berechnet. Zur Bestimmung der intrinsische Viskosität von hochmolekularen oder hochkristallinen Polyethylenterephthalaten, die nicht in dem 60/40-Lösungsmittelgemisch löslich sind, werden 0,1 g Polymer (gemahlenes Granulat) in 25 ml einer 50/50-Mischung aus Trifluoressigsäure und Dichlormethan gelöst. Die Viskosität dieser Lösung wurde bei 30 °C mit einem Ubbelohde OC Viskosimeter bestimmt. Die intrinsische Viskosität wurde mit Hilfe der Billmeyer-Gleichung und Regressionsanalyse (in Bezug auf das 60/40 Phenol/Tetrachlorethan-Gemisch) berechnet. Die Regressionsberechnung lautet:
I.V. (60/40 Phenol/Tetrachlorethan) = 0,8229 x IV (50/50 Trifluoressigsäure/Dichlormethan) + 0,0124

### Triamin (Xylylentriamin)-Gehalt

Das Triamin wird nach Spaltung der Probenmatrix mittels Kapillarelektrophorese und UV-Detektion analysiert. Die Quantifizierung erfolgt nach der Methode des internen Standards. Als interner Standard wird N-Methyl-Imidazol verwendet. Zur Probenvorbereitung werden ca. 200 mg Granulat mit 15 ml 1N H₂SO₄ 4h bei 180 Grad C im Autoklaven gespalten. 0,5 ml der Spaltlösung werden mit 1 ml int. Standardlösung versetzt, dann wird mit Ba(OH)₂-Lösung das Sulfat gefällt und mit Wasser auf 50 ml eingestellt. Aliquote dieser Lösungen werden der Elektrophorese unterzogen. Zur Elektrophorese werden ein CE-Kompaktsystem der Firma Biofocus, Kapillaren (fused silica unbelegt) und ein elektronischer Integrator verwendet.

Elektrophorese Bedingungen: Kapillare: fused silica unbelegt; 40 cm Gesamtlänge; 35,5 cm Trennlänge; 75 µm Innendurchmesser; Kathodenelektrolyt: 20 mM NaH2PO4(pH 2,5 mit H₃PO₄ eingestellt); Anodenelektrolyt: 20 mM NaH2PO4(pH 2,5 mit H₃PO₄ eingestellt); Trennspannung: + 15 kV / + 375 V/cm
Temperatur: 25°C; Detektion: UV/λ = 200 nm; Probenaufgabe: 5 PSI*s

### Schmelzviskosität

Die Schmelzviskositäten wurden mit Hilfe eines deformationsgesteuerten Rheometers (Rotationsrheometer) der Firma TA - Instruments (ARES) bestimmt. Vor der Messung wird die Polyamidprobe standardmäßig > 3 d (Tage) bei 80°C im Vakuumofen getrocknet. Die Probe wird direkt aus dem Vakuumofen heraus auf die vortemperierte untere Platte des Rheometers gegeben, und dessen Temperierofen geschlossen. Nun wird die obere Platte nach unten gefahren, bis der Messspalt von 1 mm erreicht ist. Ab hier startet die Aufschmelzzeit von 5 min. Die überstehende Probe zw. den beiden Platten wird mit einem Spatel abgestreift. Nach diesen 5 min Aufschmelzzeit beginnt die Messung, die über einen Zeitraum von 70 min läuft. Messbedingungen: Messgeometrie: Platte - Platte ∅ 25mm; Messspalt: 1mm; Aufschmelzzeit: 5 Minuten; Deformation: 30%.

### Festphasenkondensationstest

Zur Bestimmung von ΔRV werden die Polyamidproben einer Festphasenkondensation bei 230°C für 14 h unterzogen. Dazu werden 10 g (der) Polyamidgranulat in ein Temperrohr eingefüllt und dieses wird in ein auf 230°C geheiztes Ölbad gestellt. Im Temperrohr steht das Granulat unter einem Stickstoffdurchfluss von 10 I/h.
Haze (Trübung) - Messung

Die Messungen erfolgten durch die Seitenwände der Flaschen. Benutzt wurde ein HunterLab ColorQUEST Sphere Spectrophotometer System ausgestattet mit einem IBM PS/2 Model 50Z Computer, IBM Proprinter II Drucker, verschiedenen Halterungen für die Probenkörper und grünen, grauen und weißen Kalibrierungsplatten. Das HunterLab Spectrocolorimeter mit dem ist ein Instrument zur Bestimmung von Farbe und Aussehen. Licht von der Lampe wird an einer kreisrunden Öffnung gestreut und entweder durch ein Objekt zu einer Linse geführt oder an einem Objekt zu einer Linse reflektiert.

Die Linse sammelt das Licht und führt es zu einem Beugungsgitter, welches das Licht in seine einzelne Wellenlängen Bereiche zerteilt. Das dispergierte Licht wird auf eine Anordnung von Silizium Dioden geleitet. Signale von den Dioden gehen durch einen Verstärker in einen Konverter und werden zu Daten verarbeitet. Die Haze-Werte werden durch die Software zur Verfügung gestellt. Berechnet wird das Verhältnis aus der Transmission des Streulichtes zur totalen Lichttransmission. Durch Multiplikation mit 100 wird der Haze-Wert erhalten (0% steht für eine transparentes Material, 100% für einen opakes Material). Die Proben, die entweder für die Transmissions- oder Reflektionsmessung vorbereitet wurden, müssen sauber und frei von allen Arten von Kratzern oder Beschädigungen sein. Im Fall der Transmission muss die Größe der Probe der Größe der kreisrunden Öffnung angepasst sein. Jede Probe wird an vier verschiedenen Stellen gemessen. Zur Messung der Dicke der Flaschenwände wurde ein Panametrics Magna-Mike 8000 Hall Effect Thickness Gauge benutzt.

### Beispiel 1:

In einen gerührten 10 I Autoklaven (Spitzkessel mit Bodenventil) werden bei Raumtemperatur unter Stickstoffstrom (ca. 10 I/h) 2121,4 g (14,52 mol, entspricht einem Adipinsäureüberschuss von 100 mmol/kg Adipinsäure) Adipinsäure, 1929,6 g (14,17 mol) meta-Xylylendiamin und 1714,3 g Wasser gefüllt. Durch die exotherme Reaktion der Salzbildung steigt die Innentemperatur auf 90 °C an.. Unter Rühren (80 UPM) wird in einem Zeitraum von 60 min bei geschlossenem Kessel bis auf 136 °C aufgeheizt. Bei einem Druck von 2 bar wird dann innerhalb von 75 min Wasser abdestilliert, bis ein ca. 90 %ige Gemisch erhalten wird. Der Kessel wird wieder geschlossen und unter weiterem Auheizen wird bei Erreichen einer Temperatur von 170 °C bei 4 bar das restliche Wasser innerhalb von 50 min abdestilliert. Anschließend wird der Kessel innerhalb von 20 min auf Atmosphärendruck entspannt, wobei die Temperatur auf 249 °C steigt. Nach Erreichen des Atmosphärendrucks wird unter Stickstoffstrom 20 min nachkondensiert, die Temperatur steigt auf 262 °C. Nach weiteren 10 Minuten Nachkondensation unter Vakuum (1000 - 200 mbar) wird das Polyamid über das Bodenventil ausgefahren, durchläuft als Strang ein Wasserbad und wird granuliert. Anschließend erfolgte die Trocknung bei 105 °C, bis eine Restfeuchte von unter 250 ppm erreicht war. Es wurden 3350 g Granulat erhalten. Nach Trocknung wurde eine relative Viskosität von 1,601, ein Aminoendgruppengehalt von 10 mmol/kg und ein Säureendgruppengehalt von 221 mmol/kg gemessen.

### Beispiel 2:

Die Kondensation wurde nach dem in dem Beispiel 1 beschriebenen Prozess durchgeführt. Als Ansatz wurden 2101,0 g (14,38 mol, entspricht einem Adipinsäureüberschuss von 60 mmol/kg Adipinsäure) Adipinsäure, 1929,6 g (14,17 mol) meta-Xylylendiamin und 1714,3 g Wasser verwendet.

Es wurden 3200 g Granulat erhalten. Nach Ausfahren wurde eine relative Viskosität von 1,913, ein Aminoendgruppengehalt von 17 mmol/kg und ein Säureendgruppengehalt von 138 mmol/kg gemessen. Durch eine Festphasenkondensation in einem Taumler bei 185 °C unter Stickstoffdurchfluss wurde die relative Viskosität nach 8 h auf 1,990 angehoben, bei einem Aminoendgruppengehalt von 9 mmol/kg und einem Säureendgruppengehalt von 133 mmol/kg.

### Beispiel 3:

Die Kondensation wurde nach dem in dem Beispiel 1 beschriebenen Prozess durchgeführt. Als Ansatz wurden 2111,2 g (14,45 mol, entspricht einem Adipinsäureüberschuss von 80 mmol/kg Adipinsäure) Adipinsäure, 1929,6 g (14,17 mol) meta-Xylylendiamin und 1714,3 g Wasser verwendet. Nach Entspannen des Kessels auf Atmosphärendruck wurde 30 min unter Stickstoffstrom nachkondensiert, anschließend weitere 15 min unter Vakuum (1000 - 200 mbar) , dann wurde dausgefahren und granuliert.

Es wurden 3310 g Granulat erhalten. Vor Trocknung wurde eine relative Viskosität von 1,703, ein Aminoendgruppengehalt von 11 mmol/kg und ein Säureendgruppengehalt von 200 mmol/kg gemessen. Nach Trocknung wurde eine relative Viskosität von 1,721, ein Aminoendgruppengehalt von 11 mmol/kg und ein Säureendgruppengehalt von 197 mmol/kg erhalten.

### Beispiel 4:

Die Kondensation wurde nach dem in dem Beispiel 1 beschriebenen Prozess durchgeführt. Als Ansatz wurden 2111,2 g (14,45 mol, entspricht einem Adipinsäureüberschuss von 80 mmol/kg Adipinsäure) Adipinsäure, 1929,6 g (14,17 mol) meta-Xylylendiamin und 1714,3 g Wasser verwendet. Nach Entspannen des Kessels auf Atmosphärendruck wurde 30 min unter Stickstoffstrom nachkondensiert, anschließend weitere 5 min unter Vakuum (1000 - 200 mbar), dann wurde ausgefahren und granuliert.

Es wurden 3380 g Granulat erhalten. Nach Ausfahren wurde eine relative Viskosität von 1,790, ein Aminoendgruppengehalt von 14 mmol/kg und ein Säureendgruppengehalt von 183 mmol/kg gemessen. Nach Trocknung wurde eine relative Viskosität von 1,779, ein Aminoendgruppengehalt von 10 mmol/kg und ein Säureendgruppengehalt von 180 mmol/kg erhalten.

### Vergleichsbeispiel 1a und b

In WO-A- 00/22043 wird in dem Beispiel der Herstellung eines säureterminierten Polyamids aus einer 60 Gew.-% Salzlösung von Adipinsäure und meta-Xylylendiamin beschrieben. Zum Vergleich wurde das Beispiel exakt nach der angegebenen Vorschrift nachgestellt Wobei die Ansatzgröße halbiert werden musste, weil das in der WO-A-00/222043 angegebene Reaktionsgefäß für den angegebenen Ansatz zu klein ist! Eine Mischung aus Wasser 105 g Wasser und 89,4 g (0,612 mol, 2 mol% Überschuss) Adipinsäure wurden in einen 500 ml Kolben gegeben, anschließend wurde 30 min mit Stickstoff gespült. 81,7 g (0,599 mol) meta-Xylylendiamin wurden schnell zugegeben. Der Kolben war mit einem Stickstoff-Einsatz, einem Metallrührer und einer kurzen Destillationsbrücke ausgestattet. Der Kolben wurde dann für 30 Minuten in ein auf 110°C vorgeheiztes Metall/Ölbad gestellt. Innerhalb von 60 Minuten wurde die Temperatur schrittweise auf 275 °C angehoben und ein leicht viskoses, klares Polyamid wurde erhalten. Die inhärente Viskosität lag bei IV = 0,42 (0,458), die relative Viskosität bei RV = 1,52, der Aminoendgruppengehalt bei AEG = 28 mmol/kg(10 mmol/kg) und der Säureendgruppengehalt bei CEG = 305 mmol/kg (220 mmol/kg).
(In den Klammern ist der in WO 0022043 beschriebene Wert angegeben.)
a) Die Vorschrift wurde exakt noch einmal wiederholt.
   Die inhärente Viskosität lag bei IV = 0,38 (0,458), die relative Viskosität bei RV = 1,47, der Aminoendgruppengehalt bei AEG = 49 mmol/kg (10 mmol/kg) und der Säureendgruppengehalt bei CEG = 318 mmol/kg (220 mmol/kg).

Die hergestellten Polyamide wurden auf ihren Triamingehalt hin untersucht. Die nach dem diskontinuierlichen Verfahren hergestellten erfindungsgemäßen Polyamidzusammensetzungen zeichnen sich durch einen Triamingehalt kleiner als 0,15 Gew.-% aus.

Außerdem wurden die hergestellten Polyamide wurden auf ihren Restmonomergehalt an Adipinsäure hin untersucht. Die nach dem diskontinuierlichen Verfahren hergestellten erfindungsgemäßen Polyamidzusammensetzungen zeichnen sich vor der Extraktion durch einen Restgehalt an Adipinsäure kleiner als 500 ppm aus.

Die Stabilität in der Schmelze wurden durch Rotationsrheologiemessungen untersucht. Dabei wurde die Entwicklung der Schmelzeviskosität in Abhängigkeit von der Zeit bestimmt. Als Messgröße für die Schmelzestabiltät wurde der Quotient aus der Schmelzeviskosität nach 60 min und der Schmelzeviskosität nach 5 min festgelegt.
Der erfindungsgemäßen Polyamidzusammensetzungen zeigen eine sehr hohe Stabilität und zeichnen sich daher durch niedrige Werte für den Quotienten η₆₀ₘᵢₙ/η₅ₘᵢₙ aus, die Werte liegen unter 1,5.

Die Stabilität während Festphasenkondensationen (Solid State Polykondensation = SSP) wurde durch Bestimmung der relativen Viskositäten vor und nach der Festphasenkondensation gemessen. Die Festphasenkondensationen wurden bei 230°C für 14 h unter Stickstoffstrom durchgeführt. Als Messgröße für die Stabilität wurde die relative Viskositätsdifferenz
ΔRV = RV_{vor SSP}-RV_{nach SSP} festgelegt. Die erfindungsgemäßen Polyamide zeichnen sich durch eine relative Viskositätsdifferenz kleiner als 0,4 aus.

Die Ergebnisse sind in Tabelle 1 zusammengestellt.

**Tabelle 1**

| | RV | AEG | CEG | Triamingehalt | Restgehalt AS | η₆₀ₘᵢₙ/ η₅ₘᵢₙ | △RV |
|---|---|---|---|---|---|---|---|
| BEISPIEL 1 | 1,600 | 9 | 228 | 0,11 % | 400 ppm | 1,38 | 0,19 |
| BEISPIEL 2 | 1,989 | 9 | 133 | 0,09 % | 180 ppm | 1,38 | 0,39 |
| BEISPIEL 3 | 1,721 | 11 | 197 | 0,13 % | 340 ppm | 1,27 | 0,22 |
| BEISPIEL 4 | 1,779 | 10 | 180 | 0,13% | 300 ppm | 1,30 | 0,27 |
| Vergleichsb.1a | 1,52 | 28 | 305 | 0,16% | 1200 ppm | 2,34 | 0,31 |
| Vergleichsb.1b | 1,47 | 49 | 318 | 0,16 % | 3100 ppm | 2,43X | 0,35 |
| MXD6007* | 2,550 | 20 | 65 | 0,10 % | 30 ppm | 3,5 | 0,71 |

| | | | | | | | |
|---|---|---|---|---|---|---|---|
| Alle Werte in der Tabelle wurden nach der Trocknung, bzw. Festphasenkondensation bestimmt. (*z.B. laut den Patenten EP-A-0084661, EP-A-007100 und US-B-6,303,741 wird das MXD6007 in einem Schmelzeprozess hergestellt und nicht über eine homogene Salzlösung) | | | | | | | |

Tabelle 1 fasst die wichtigsten Ergebnisse in Bezug auf die Synthese zusammen. BEISPIEL 1-4 sind die erfindungsgemäßen Polyamidzusammensetzungen, in denen die relative Viskosität, die Endgruppen und auch die Prozessbedingungen variiert wurden. MXD6007, kommerziell erhältlich von der Mitsubishi Gas Chemical, wurde als weiteres Vergleichsbeispiel verwendet. Im Gegensatz zu den erfindungsgemäßen Polyamidzusammensetzungen erfüllen alle drei Vergleichbeispiele nicht gleichzeitig alle Kriterien: AEG kleiner als 15, Triamingehalt kleiner als 0,15, η₆₀ₘᵢₙ/η₅ₘᵢₙ< 1,5 und ΔRV < 0.4.

### Beispiel 5:

Eine homogene, wässrige Lösung, bestehend aus 103,0 kg (704,76 mol, entspricht einem Adipinsäureüberschuss von 110 mmol/kg) Adipinsäure und 93,4 kg (685,81 mol) meta-Xylylendiamin und 193,2 kg Wasser wurde aus einem beheizten Vorratsbehälter bei ca. 90 °C mit einer Geschwindigkeit entsprechend einer Polyamidmenge von 5 kg/Stunde mittels einer Dosierpumpe in einen vertikal angeordneten Röhrenverdampfer befördert. Der Verdampfer war mit einem Wärmeträger, der eine Temperatur von 275 °C hatte beheizt. Der Verdampfer hatte eine Länge 4500 mm und einen Inhalt von 5000 ml und eine wärmeübertragende Oberfläche von etwa 0,5 m². Die Verweilzeit im Verdampfer betrug ca. 60 sec. Das aus dem Verdampfer austretende Gemisch aus Präpolymeren und Wasserdampf hatte eine Temperatur von 255 °C und wurde in einem Abscheider in Wasserdampf und Schmelze getrennt. Die Schmelze verweilte im Abscheider noch 5 min und wurde dann mittels eines Austrags/Entgasungsextruders in eine Unterwasserkugelgranulierung gefördert. Der Abscheider und die Verdampferzone wurden mittels einer Druckhalteeinrichtung, die nach der Kolonne angeordnet war, wurde in eine Füllkörperkolonne mit ca. 10 theoretischen Böden geführt, in die am Kopf ca. 1,5 I Brüdenkondensat pro Stunde zur Erzeugung von Rücklauf aufgegeben wurden. Am Kolonnenkopf stellte sich eine Temperatur von 155 °C ein. Der nach dem Entspannungsventil austretende Wasserdampf wurde kondensiert und hatte einen Gehalt von meta-Xylylendiamin von weniger als 0,05 Gew.-%. Als Kolonnensumpf erhielt man eine wässrige Lösung von meta-Xylylendiamin. Diese Lösung wurde über eine Pumpe wieder vor dem Eintritt in den Verdampfer der Ausgangssalzlösung zugegeben. Nach dem Verdampfer hatte das Präpolymere eine relative Viskosität von 1,0-1,1, gemessen in 98 Gew.-%iger Schwefelsäure bei 25 °C und wies nach der Endgruppenanalyse einen Umsatz von 93 bis 95 % auf. Der Gehalt an Xylylentriamin betrug 0,20 bis 0,24 Gew. % bezogen auf das Polyamid. Nach Granulierung hatte das Polyamid eine sehr helle Eigenfarbe sowie eine relative Viskosität von 1,50 bis 1,55. Der Aminoendgruppengehalt lag bei 42 mmol/kg, der Säureendgruppengehalt bei 235, mmol/kg. Im Austragesextruder wurde die Schmelze auf Normaldruck entspannt und bei einer Verweilzeit von weniger als 1 min praktisch nicht mehr weiter kondensiert. Das in Granulatform überführte Polymere wird im Anschluss - mit Wasser - in einer Gegenstromanlage bei 90 -105°C unter den üblichen Bedingungen extrahiert. Danach wurde das erhaltene Granulat durch eine Festphasenkondensation bei einer Temperatur von 160 °C für 30 h auf eine relative Endviskosität von 1,68 getempert. Nach Temperung lag der Aminoendgruppengehalt lag bei 10 mmol/kg, der Säureendgruppengehalt bei 203 mmol/kg und der Triamingehalt bei 0,14 Gew.-%.

Die Ergebnisse sind in Tabelle 2 zusammengestellt.

**Tabelle 2**

| | RV** | AEG** | CEG** | Triamingehalt | △RV |
|---|---|---|---|---|---|
| BEISPIEL 5 | 1,672 | 10 | 203 | 0,14 % | 0,21 |

| | | | | | |
|---|---|---|---|---|---|
| (**Werte nach Festphasenkondensation) | | | | | |

Die extrem gute Dispergierbarkeit der erfindungsgemäßen Polyamide in modifizierten Polyethylenterephthalaten zeigt sich in niedrigen Haze-Werten, die an Flaschen gemessen wurden, die aus diesen Mischungen hergestellt wurden.
Dazu wurden Granulatmischungen aus 2 - 10 % Polyamid und 90 -98 % Polyethylenterephthalaten hergestellt.
Diese Granulatmischungen wurden auf einer Spritzgussmaschine 420C der Firma Arburg zu Flaschenpreforms mit einem Gewicht von 28 g verarbeitet. Mit Hilfe einer Sidel SB01 Blasformmaschine wurden aus den Preforms bei ca. 100°C bei einem Druck von 40 bar Flaschen mit einem Volumen von 660 ml geblasen.
An diesen Flaschen wurden die Haze-Messungen vorgenommen.

In Tabelle 3 sind die Ergebnisse der Versuchsreihen mit Granulatmischungen wiedergegeben.

**Tabelle 3**

| | MXD6007 | BEISPIEL 1 | BEISPIEL 2 |
|---|---|---|---|
| Polyamid-Anteil [Gew.%] | 5 | 5 | 5 |
| RV | 2,55 | 1,600 | 1,989 |
| AEG [mmol/kg] | 20 | 9 | 9 |
| CEG [mmol/kg] | 65 | 228 | 133 |
| | | | |
| Polyester-Anteil [Gew.%] | 95 | 95 | 95 |
| TPS [mol%] | 84,2 | 84,2 | 84,2 |
| IPS [mol%] | 1,2 | 1,2 | 1,2 |
| LiSIPA [mol%] | 0,5 | 0,5 | 0,5 |
| | | | |
| Gestreckte Flaschenwand | | | |
| Streckverhältnis (lange Seite) | 3,09 | 3,09 | 3,09 |
| Dicke [mm] | 0,35 | 0,35 | 0,35 |
| Haze [%] | 6,6 | 5,4 | 5,2 |

| | | | |
|---|---|---|---|
| Zur Erklärung: TPS = molarer Anteil in % an Terephthalsäure im Säureanteil des Polyethylenterephthalats IPS = molarer Anteil in % an Isophthalsäure im Säureanteil des Polyethylenterephthalats LiSIPA= molarer Anteil in % an dem Li-Salz der Sulfoisophthalsäure im Säureanteil des Polyethylenterephthalats | | | |

Die identische Versuchsreihe wurde auch mit den erfindungsgemäßen Polyamidzusammensetzungen, die im kontinuierlichen Verfahren hergestellt wurden, durchgeführt. Tabelle 4 fasst die Ergebnisse zusammen.

**Tabelle 4**

| | MXD6007 | Beispiel 5 |
|---|---|---|
| Polyamid-Anteil [Gew.%] | 5 | 5 |
| RV | 2,55 | 1,672 |
| AEG [mmol/kg] | 20 | 10 |
| CEG [mmol/kg] | 65 | 203 |
| | | |
| Polyester-Anteil [Gew.%] | 95 | 95 |
| TPS [mol%] | 84,2 | 84,2 |
| IPS [mol%] | 1,2 | 1,2 |
| LiSIPA [mol%] | 0,5 | 0,5 |
| | | |
| Gestreckte Flaschenwand | | |
| Streckverhältnis (lange Seite) | 3,09 | 3,09 |
| Dicke [mm] | 0,35 | 0,35 |
| Haze [%] | 6,6 | 4,85 |

Weiterhin wurden auch Haze-Messungen an Flaschen,vorgenommen, die aus bikomponenten Granulaten mit einer Kern/Schale-Struktur hergestellt wurden.
Die bikomponenten Granulate (Kern: Polyamid, Schale: Polyethylenterephthalat)wurden durch einen Coextrusionsprozess hergestellt. Dazu wurde für das Polyamid eine Haake Einschneckenextruder und für das Polyethylenterephthalat ein Killion Einschneckenextruder verwendet. Die intrinsische Viskosität des Polyethylenterephthalats lag vor der Coextrusion bei I.V. = 0,54 - 0,56 dl/g. Die Verarbeitungstemperatur lag bei 270-280 °C. Die erhaltenen bikomponenten Granulate wurden im Anschluss für 12 Stunden einer Festphasenkondensation bei 210-215 °C und Stickstoffdurchfluss unterzogen. Dazu wurde ein Reaktor der Firma Karl Kurt Juchheim Laborgeräte benutzt. Nach der Festphasenkondensation wurden intrinsische Viskositäten von I.V. = 0,81-0,83 dl/g gemessen.
Nach der Festphasenkondensation wurden die bikomponenten Granulate mit Hilfe einer Spritzgussmaschine 320 der Firma Arburg zu Flaschen Preforms mit einem Gewicht von 49 g verarbeitet. Aus diesen Preforms wurden dann im Anschluss bei ca. 100°C und einem Druck von 40 bar mit einer Sidel SB01 Blasformmaschine die entsprechenden Flaschen mit einem Volumen von 1,5 I geblasen.

Tabelle 5 fasst die Ergebnisse zusammen.

**Tabelle 5**

| | MXD6007 | BEISPIEL 1 | BEISPIEL 2 | BEISPIEL 5 |
|---|---|---|---|---|
| Polyamid-Anteil [Gew.%] | 5 | 5 | 5 | 5 |
| RV | 2,55 | 1,600 | 1,989 | 1,672 |
| AEG [mmol/kg] | 20 | 9 | 9 | 10 |
| CEG [mmol/kg] | 65 | 228 | 133 | 203 |
| | | | | |
| Polyester-Anteil [Gew.%] | 95 | 95 | 95 | 95 |
| TPS [mol%] | 84,2 | 84,2 | 84,2 | 84,2 |
| IPS [mol%] | 1,2 | 1,2 | 1,2 | 1,2 |
| LiSIPA [mol%] | 0,5 | 0,5 | 0,5 | 0,5 |
| | | | | |
| Gestreckte Flaschen- wand | | | | |
| Streckverhältnis (lange Seite) | 2,7 | 2,7 | 2,7 | 2,7 |
| Dicke [mm] | 0,32 | 0,32 | 0,32 | 0,32 |
| Haze [%] | 13,1 | 3,47 | 5,27 | 3,20 |

## Patentansprüche

1. Polyamide aus meta-Xylylendiamin und Adipinsäure, **dadurch gekennzeichnet, dass** der Aminoendgruppengehalt kleiner als 15 mmol/kg ist, die relative Viskosität 1,55 bis 2,0 beträgt und der Gehalt an Triamin im Polyamid kleiner gleich 0,3 mol-% ist, wobei die relative Viskosität des Polyamids mit Proben von 1 g Polyamid in 100 ml 96 Gew.-%iger Schwefelsäure und die Messung mit Hilfe eines Ubbelohde-Viskosimeters 2 Typ 50120 (FirmaSchott) nach DIN EN ISO 1628-1 durchgeführt wird.

2. Polyamid aus meta-Xylylendiamin und Adipinsäure nach Anspruch 1, **dadurch gekennzeichnet, dass** der Gehalt an Triamin im Polyamid kleiner gleich 0,15 mol-% ist.

## Claims

1. A polyamide composed of meta-xylylenediamine and adipic acid, wherein the amino end group content is less than 15 mmol/kg, the relative viscosity is from 1.55 to 2.0 and the content of triamine in the polyamide is less than or equal to 0.3 mol%, the relative viscosity of the polyamide with samples of 1 g of polyamide in 100 ml of 96% by weight of sulfuric acid and the measurement being performed with the aid of an Ubbelohde viscometer 2, type 50120 (from Schott), to DIN EN ISO 1628-1.

2. The polyamide composed of meta-xylylenediamine and adipic acid according to claim 1, wherein the content of triamine in the polyamide is less than or equal to 0.15 mol%.

## Revendications

1. Polyamides de méta-xylylènediamine et d'acide adipique, **caractérisés en ce que** la teneur en groupe terminaux amino est inférieure à 15 mmoles/kg, la viscosité relative est de 1,55 à 2,0 et la teneur en triamine dans le polyamide est inférieure à 0,3% en mole, la viscosité relative du polyamide avec des échantillons de 1 g de polyamide dans 100 ml d'acide sulfurique à 96% en poids et la mesure étant réalisée à l'aide d'un viscosimètre d'Ubbelohde 2 de type 50120 (société Schott) selon la norme DIN EN ISO 1628-1.

2. Polyamide de méta-xylylènediamine et d'acide adipique selon la revendication 1, **caractérisé en ce que** la teneur en triamine dans le polyamide est inférieure à 0,15% en mole.
